# FASCICULE DE BREVET EUROPEEN

(11) **EP 4 176 344 B1**
(45) Date de publication et mention de la délivrance du brevet: **18.02.2026**
(21) Numéro de dépôt: 21748914.5
(22) Date de dépôt: 02.07.2021
(51) Int. Cl.: G06F 3/04886, G06F 3/0488, G05B 19/042, H04L 12/28, G06F 3/04817, G06F 3/0481

(54) **SELECTION ET COMMANDE D'OBJETS CONNECTES DEPUIS UNE REPRESENTATION SYMBOLIQUE D'UNE TOPOGRAPHIE D'UN SITE**
AUSWAHL UND STEUERUNG VERBUNDENER OBJEKTE AUS EINER SYMBOLISCHEN DARSTELLUNG EINER TOPOGRAPHIE EINES STANDORTS
SELECTION AND CONTROL OF CONNECTED OBJECTS FROM A SYMBOLIC REPRESENTATION OF A TOPOGRAPHY OF A SITE

(30) Priorité: 05.07.2020 FR 2007117
(43) Date de publication de la demande: 10.05.2023
(73) Titulaire: Orange, 92130 Issy-les-Moulineaux (FR)
(72) Inventeur: LE GAC CESBRON, Sylvie, 92326 CHÂTILLON CEDEX (FR); MARTINEZ, Thierry, 92326 CHÂTILLON CEDEX (FR); CHEVALLIER, Sébastien, 92326 CHÂTILLON CEDEX (FR)
(74) Mandataire: Plasseraud IP
(86) Numéro de dépôt international: PCT/FR2021/051212
(87) Numéro de publication internationale: WO 2022/008822

(56) Documents cités:
- US-A1- 2015 261 412
- US-A1- 2015 261 427
- US-A1- 2017 123 653
- US-A1- 2018 351 762
- US-A1- 2019 146 639

## Description

### Domaine technique

La présente divulgation relève du domaine de la domotique, et porte plus particulièrement sur des procédés, programmes informatiques et dispositifs de commande d'objets connectés.

### Technique antérieure

La démocratisation des objets connectés, à la fois dans le logement et dans l'entreprise, impose de mettre en place des solutions techniques pour en centraliser le contrôle afin de répondre à différents besoins de confort, de communication, de sécurité, etc.

Actuellement, il existe des interfaces permettant à des utilisateurs d'accéder à différents équipements et/ou objets connectés installés dans un espace donné (par exemple dans un logement).

Ces interfaces présentent les objets connectés sous la forme d'une ou de plusieurs listes. Chaque objet connecté est ainsi identifiable par un nom qui lui est associé. Référencer tous les objets connectés d'un bâtiment sous la forme d'une simple liste comporte l'inconvénient qu'un utilisateur disposant de plusieurs objets de même nature dans un bâtiment risque d'actionner par erreur le mauvais objet.

Pour remédier à cet inconvénient, il est alors nécessaire d'indiquer la localisation de chaque objet. Par exemple, le nom associé dans la liste à chaque objet connecté peut comporter une indication de la pièce dans laquelle se situe l'objet connecté en question. Un tel nommage ne peut pas facilement être automatisé sans modéliser le bâtiment. Par ailleurs, exiger de l'utilisateur de nommer les objets connectés un par un tout en respectant une convention de nommage commune est peu ergonomique.

Une autre possibilité est de créer une liste différente pour chaque pièce d'un bâtiment, chaque liste référençant les objets connectés présents dans la pièce correspondante. La création de telles listes peut être semi-automatisée, en demandant simplement à l'utilisateur de renseigner dans quelle pièce se trouve chaque objet connecté installé. Des procédés de commande d'objets connectés sont divulgués dans les demandes US 2018/351762 A1 et US 2015/261427 A1.

Néanmoins, les erreurs d'interactions restent possibles.

En effet, l'emplacement exact d'un objet connecté donné dans une pièce donnée ne peut pas être indiqué sans équivoque. Une raison est que la disposition des lieux peut être complexe. Une autre raison est qu'une pièce donnée peut comprendre plusieurs objets connectés de même nature. Il est par ailleurs courant que la personne réalisant l'installation d'un objet connecté n'en soit pas l'unique utilisateur final. Ainsi, la constitution d'une ou plusieurs listes répertoriant les objets connectés et indiquant leur localisation peut ne pas être intuitive.

De manière plus générale, les interfaces référençant les objets connectés d'un site, par exemple d'un bâtiment, sous la forme d'une ou de plusieurs listes présentent l'inconvénient de ne pas donner à voir ni représenter l'espace du site.

Il existe aussi des logiciels fournissant des modélisations complexes de bâtiments destinées à des professionnels de l'architecture et de la construction ou au grand public. Ces représentations se basent sur un plan 2D ou 3D d'un bâtiment.

Une telle représentation n'est pas pour autant optimale et ne pourrait notamment pas être adaptée pour les besoins d'une interface de commande d'objets connectés. En effet, une telle représentation engendrerait des coûts de calculs et d'affichage élevés.

Il existe donc un besoin pour fournir une représentation de l'espace économe en ressources informatiques afin de permettre à un utilisateur de commander les objets connectés installés dans un site tout en évitant les erreurs d'interaction dues à une identification erronée des objets connectés.

### Résumé

La présente divulgation vient améliorer la situation.

L'invention est exposée dans les revendications indépendantes. Il est proposé un procédé de commande d'au moins un objet connecté faisant partie d'un groupe d'objets connectés déployés dans une zone géographique et connectés à travers un réseau de télécommunication, le procédé comprenant :
- un affichage, par une interface visuelle, d'une représentation symbolique de la zone géographique sous la forme d'une pluralité de boutons interactifs juxtaposés, chaque bouton interactif étant associé à une sous-zone respective de la zone géographique, chaque sous-zone étant apte à être associée à au moins un objet connecté respectif du groupe d'objets connectés,
- une obtention d'une commande de sélection de sous-zone issue d'une interaction, via une interface utilisateur, avec un bouton interactif particulier affiché,
- sur la base de la commande de sélection de sous-zone obtenue, une sélection de la sous-zone associée au bouton interactif particulier,
- un affichage (21), par une interface visuelle, d'une représentation symbolique de la sous-zone sélectionnée sous la forme d'une pluralité de boutons interactifs juxtaposés, chaque bouton interactif étant associé à un objet connecté associé à la sous-zone, et
- sur la base d'un retour obtenu via l'interface utilisateur, une émission d'un signal de commande destiné à au moins un objet connecté associé à la sous-zone sélectionnée.

Le réseau de télécommunication peut être local, par exemple pour des objets connectés installés dans un logement, ou étendu, par exemple pour des objets connectés installés dans des bâtiments multiples, voire des sites multiples.

Le signal de commande émis peut viser à piloter l'objet connecté, par exemple l'allumer, l'éteindre, en régler un paramètre, en programmer un fonctionnement ultérieur, etc... Le signal de commande émis peut viser à requérir un renseignement, c'est-à-dire une transmission par l'objet connecté d'une donnée qui y est stockée ou d'une donnée qu'il est apte à mesurer au moyen d'un capteur.

Grâce à la représentation symbolique, chaque objet connecté est associé à un élément graphique identifié. L'élément graphique identifié est un élément reproductible interactif. L'interaction avec cet élément graphique identifié permet d'accéder aux équipements ou objets connectés associé à l'élément graphique. De cette façon, il est possible de fournir à un utilisateur une représentation de l'espace économe en ressources informatiques. Cette représentation de l'espace permet à l'utilisateur de commander tout objet connecté installé dans un site tout en évitant les erreurs d'interaction dues à une identification erronée des objets connectés installés.

Un autre avantage, lié à la représentation symbolique de zones géographiques sensibles, est de fournir un niveau de détail suffisant pour la commande d'objets connectés par une personne habilitée, mais toutefois suffisamment édulcorée pour empêcher une utilisation de la représentation symbolique à des fins malveillantes.

Les caractéristiques exposées dans les revendications dépendantes peuvent, optionnellement, être mises en œuvre. Elles peuvent être mises en œuvre indépendamment les unes des autres ou en combinaison les unes avec les autres :

Dans un exemple, l'interface utilisateur comprend un module d'interface tactile. Ainsi, l'utilisateur peut simplement presser le bouton interactif correspondant à une sous-zone pour accéder à la liste des objets connectés installés dans la sous-zone.

Dans un exemple, l'interface utilisateur comprend un module d'interface vocale. Ainsi l'utilisateur peut simplement indiquer le nom d'une sous-zone, telle qu'une pièce ou un étage, pour accéder à la liste des objets connectés installés dans la sous-zone. Les boutons interactifs sont agencés en fonction d'un modèle topologique de la zone géographique. Ainsi, la représentation symbolique de la zone géographique aide l'utilisateur à repérer la position respective de chaque objet connecté.

Dans un exemple, chaque bouton interactif a une forme d'alvéole. Une alvéole, de forme hexagonale régulière, permet de positionner, contre les côtés d'un premier bouton interactif représentant une première sous-zone, jusqu'à six autres boutons de même taille et forme. Une telle forme permet à la représentation symbolique d'être particulièrement synthétique et adaptable à de nombreuses topologies de bâtiments. En effet, une telle forme permet d'agencer des boutons interactifs représentant des pièces d'un bâtiment afin de représenter fidèlement l'agencement des pièces du bâtiment tout en utilisant peu d'espace sur un écran.

Dans un exemple, chaque bouton interactif comprend une icône et/ou un texte identifiant la sous-zone associée. Ainsi, chaque sous-zone est facilement identifiable.

Dans un exemple, le procédé comprend une détermination du modèle topologique à partir d'une série d'interactions via l'interface utilisateur. L'utilisateur peut par exemple sélectionner une icône et/ou un intitulé textuel, affecter cette icône et/ou cet intitulé textuel à un bouton, et affecter le bouton à un emplacement de la représentation symbolique au moyen d'actions tactiles telles que des pressions ou des glissements. Le procédé comprend une obtention des positions relatives des objets connectés du groupe d'objets connectés, par exemple sur la base d'informations d'état de canal, et une détermination du modèle topologique sur la base des positions relatives obtenues. Ainsi, il est possible que les objets connectés acquièrent automatiquement leur position relative les uns par rapport aux autres, de manière à ce qu'un objet connecté nouvellement installé, ou déplacé, soit automatiquement associé à la même sous-zone géographique que l'objet connecté le plus proche.

Dans un exemple, le procédé comprend une réception d'une notification relative à un objet connecté donné associé à une sous-zone donnée, et une animation visuelle du bouton interactif associé à la sous-zone donnée afin d'alerter un utilisateur de la réception de la notification. Ainsi, il est possible de signaler automatiquement à un utilisateur un événement particulier détecté par un objet connecté situé dans une sous-zone où l'utilisateur ne se trouve pas nécessairement.

Dans un exemple, l'animation visuelle comprend une emphase ou un changement de couleur. L'animation est alors une déclinaison d'apparence, de sorte que l'utilisateur reconnaît la sous-zone associée au bouton tout en identifiant qu'une information relative à la sous-zone est disponible.

Dans un exemple, le procédé comprend, en réponse à la sélection de la sous-zone :
- un affichage, par l'interface visuelle, d'une représentation symbolique de la sous-zone sous la forme d'une pluralité de boutons interactifs de niveau hiérarchique inférieur juxtaposés, chaque bouton interactif de niveau hiérarchique inférieur étant associé à une subdivision respective de la sous-zone sélectionnée, chaque subdivision étant associée à au moins un objet connecté respectif,
- une obtention d'une commande de sélection de subdivision issue d'une interaction, via l'interface utilisateur, avec un bouton interactif particulier de niveau hiérarchique inférieur affiché,
- sur la base de la commande de sélection de subdivision obtenue, une sélection de la subdivision associée au bouton interactif particulier de niveau hiérarchique inférieur, et
- dans lequel le signal de commande, émis sur la base d'un retour obtenu via l'interface utilisateur, est destiné à au moins un objet connecté associé à la subdivision sélectionnée.

Ainsi, il est possible, pour ne pas surcharger la représentation symbolique de la zone géographique, de la subdiviser en différents niveaux de détail. Par exemple, une représentation symbolique principale peut représenter différents bâtiments, tandis qu'une représentation symbolique plus précise peut se limiter à un bâtiment particulier, tout en indiquant des subdivisions telles que des étages, des pièces, des sections, ou autres.

En particulier, n'importe quelle zone géographique peut être représentée simplement et de manière modulaire au moyen d'une série de représentations symboliques alvéolaires ayant différents niveaux de détail.

Dans un exemple, la représentation symbolique de la sous-zone comprend un bouton interactif de menu associé à la zone géographique, et dans lequel le procédé comprend, à réception d'une interaction, via l'interface utilisateur, avec le bouton interactif de menu, une annulation de la commande de sélection de sous-zone.

Ainsi, l'utilisateur peut naviguer librement, non seulement depuis une représentation symbolique principale vers une représentation symbolique plus précise, mais également à rebours.

Il est également proposé un programme informatique comportant des instructions pour la mise en œuvre du procédé ci-avant lorsque ce programme est exécuté par un processeur.

Il est également proposé un support d'enregistrement non transitoire lisible par un ordinateur sur lequel est enregistré un programme pour la mise en œuvre du procédé ci-avant lorsque ce programme est exécuté par un processeur.

Il est également proposé un circuit de traitement comprenant un processeur connecté à une interface de communication et au support d'enregistrement non transitoire ci-avant, et configuré pour exécuter le programme informatique permettant la mise en œuvre du procédé ci-avant.

### Brève description des dessins

D'autres caractéristiques, détails et avantages apparaîtront à la lecture de la description détaillée ci-après, et à l'analyse des dessins annexés, sur lesquels :
**Fig. 1**

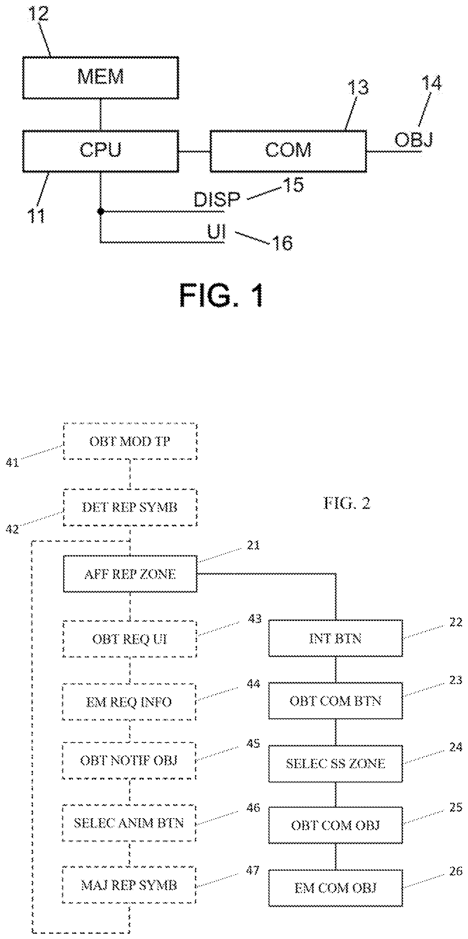

   [Fig. 1] représente de manière schématique un circuit de traitement pour la mise en œuvre d'un procédé de commande dans un mode de réalisation.
**Fig. 2**
   [Fig. 2] représente de manière schématique un procédé de commande dans un mode de réalisation.
**Fig. 3**

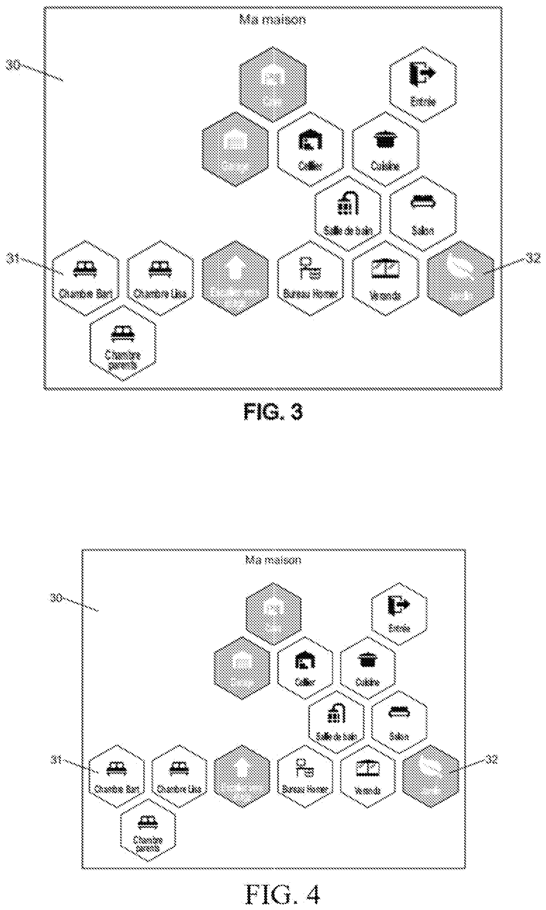

   [Fig. 3] montre un exemple de représentation symbolique pouvant être affichée par une interface visuelle dans le cadre de la mise en œuvre du procédé de commande de [Fig. 2].
**Fig. 4**
   [Fig. 4] montre un exemple d'affichage interactif par une interface visuelle animé dynamiquement dans le cadre de la mise en œuvre du procédé de commande de [Fig. 2].
**Fig. 5**

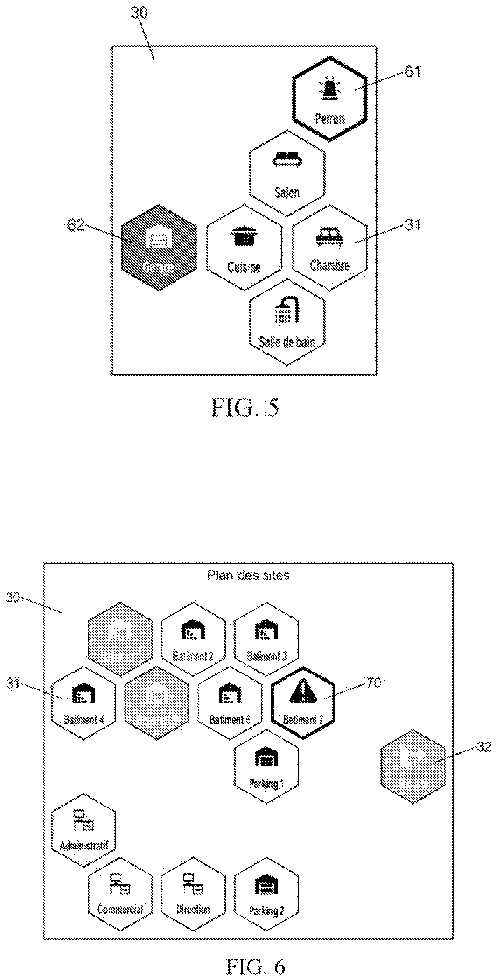

   [Fig. 5] montre un autre exemple d'affichage interactif par une interface visuelle animé dynamiquement dans le cadre de la mise en œuvre du procédé de commande de [Fig. 2].
**Fig. 6**
   [Fig. 6] montre encore un autre exemple d'affichage interactif par une interface visuelle animé dynamiquement dans le cadre de la mise en œuvre du procédé de commande de [Fig. 2].
**Fig. 7**

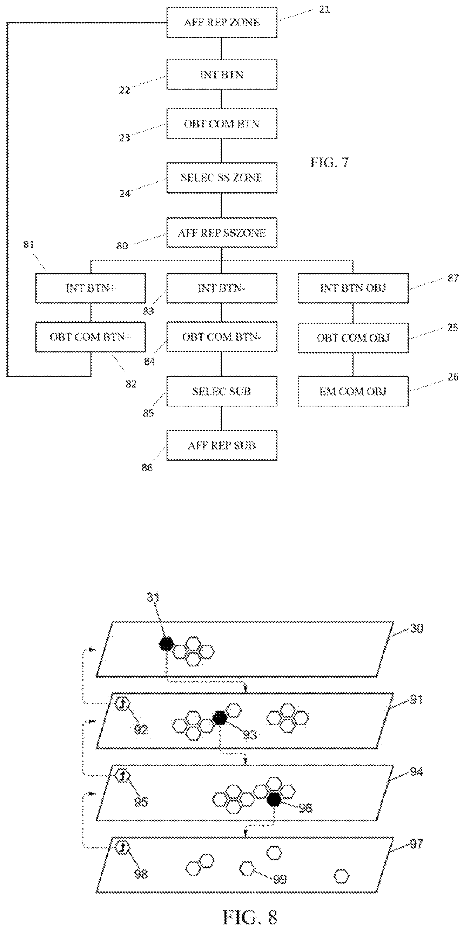

   [Fig. 7] représente de manière schématique un procédé de commande dans un mode de réalisation où l'affichage comporte une pluralité de niveaux de détail.
**Fig. 8**
   [Fig. 8] montre un exemple de série de représentations symboliques pouvant être successivement affichées par une interface visuelle dans le cadre de la mise en œuvre du procédé de commande de [Fig. 7].

### Description des modes de réalisation

Il est fait référence à [Fig. 1] qui représente un circuit de traitement d'un appareil électronique tel qu'une tablette, un téléphone mobile, un ordinateur, une télévision, un décodeur TV, une console de jeux, une passerelle domestique, une machine sur laquelle repose un service numérique décentralisé, etc...

L'appareil électronique comprend, ou est raccordé à, une interface utilisateur UI (16) qui permet à un utilisateur de commander l'appareil. L'interface utilisateur UI (16) peut comprendre par exemple un clavier, une souris, un écran tactile, un microphone couplé à un logiciel d'interprétation de commandes vocales, une manette, etc... En outre, l'appareil électronique comprend, ou est raccordé à, un dispositif d'affichage visuel DISP (15), tel qu'un écran ou un projecteur.

Le circuit de traitement comprend un processeur CPU (11) connecté à un dispositif de stockage de données MEM (12) et à une interface de communication COM (13). L'appareil électronique est connecté en réseau, via l'interface de communication COM (13) à une pluralité d'objets ou équipements connectés OBJ (14). Le processeur est en outre capable de traiter des commandes reçues de l'interface utilisateur UI (16) et de commander le dispositif d'affichage visuel DISP (15).

Les objets ou équipements connectés OBJ (14) sont répartis dans différentes sous-zones géographiques d'une zone géographique donnée et connectés, via un réseau de communication filaire ou par ondes radio, avec l'appareil électronique.

La zone géographique donnée peut désigner un bâtiment, ou un étage, ou un ensemble de pièces. Par exemple la zone géographique donnée peut être un logement et les objets ou équipements connectés, situés dans différentes pièces, peuvent être raccordés à un réseau de communication dit domestique.

Alternativement, par exemple pour un réseau d'entreprise ou d'université, la zone géographique donnée peut désigner aussi bien un seul bâtiment qu'un ensemble de bâtiments répartis sur un ou plusieurs sites.

Il est à présent fait référence à [Fig. 2], qui représente, dans un exemple de réalisation, un ordinogramme d'un algorithme général d'un programme informatique pouvant être chargé sur le dispositif de stockage de données MEM (12) et exécuté par le processeur CPU (11).

Le processeur CPU (11) obtient OBT MOD TP (41) un modèle topologique de la zone géographique donnée. Le modèle topologique est obtenu automatiquement, sur la base d'estimations de position relatives des objets ou équipements connectés.

Alternativement, le modèle topologique peut être obtenu sur la base d'interactions avec un utilisateur qui indique la localisation de chaque objet ou équipement connecté dans la zone géographique donnée. Alternativement, le modèle topologique peut être prédéterminé par exemple par un logiciel dédié tel qu'un logiciel d'architecture.

Le processeur CPU (11) détermine ensuite DET REP SYMB (42), sur la base du modèle topologique obtenu, une représentation symbolique de la zone géographique donnée.

[Fig. 3] montre un exemple d'une telle représentation symbolique (30) qui comprend un ensemble d'emplacements juxtaposés. Chaque emplacement peut être occupé par un bouton ou être libre.

Une pluralité d'emplacements sont occupés par des boutons interactifs (31) apparaissant en [Fig. 3] sur fond blanc. Optionnellement, un ou plusieurs emplacements peuvent être occupés par des boutons non interactifs (32) apparaissant en [Fig. 3] sur fond grisé.

Il est ainsi possible, par exemple, d'afficher un bouton interactif (31) pour chaque sous-zone géographique dans laquelle au moins un objet connecté est installé et un bouton non interactif (32) pour chaque sous-zone géographique dans laquelle aucun objet connecté n'est installé.

Les emplacements (31, 32) peuvent par exemple être ronds, triangulaires, carrés, rectangulaires, hexagonaux (en forme d'alvéole), etc...

Dans un exemple de réalisation, les emplacements ont tous la même forme et la même taille. Ainsi, les emplacements peuvent être agencés selon une distribution régulière, c'est-à-dire que l'espacement entre les centres de deux emplacements interactifs voisins a une valeur uniforme.

Les boutons (31, 32) sont chacun associés à une sous-zone géographique et peuvent comprendre une zone de texte et/ou une icône de manière à permettre une identification de la sous-zone géographique par un utilisateur. Par exemple, si la zone géographique est un logement composé de plusieurs pièces, alors chaque bouton peut correspondre à une pièce différente.

Une table de correspondance entre les emplacements, les boutons occupant les emplacements et les sous-zones associées aux boutons peut être stockée sur le dispositif de stockage de données MEM (12) et rendue accessible en lecture au processeur CPU (11) pour constituer la représentation symbolique de la zone géographique donnée. La table de correspondance peut également être rendue accessible en écriture au processeur CPU (11) pour mettre à jour la représentation symbolique de la zone géographique donnée.

L'agencement des boutons (31, 32) peut être déterminée de manière à représenter la topologie de la zone géographique. Ainsi, il est possible, par exemple, de disposer côte à côte des boutons correspondant à des pièces contiguës. Alternativement, il est possible de disposer les boutons côte à côte selon un autre critère que topologique, par exemple selon un ordre alphabétique ou par regroupement thématique.

La représentation symbolique de la zone géographique donnée n'est pas nécessairement déterminée par le circuit de traitement mais peut être prédéterminée par un quelconque appareil ou service numérique et simplement obtenue, par exemple téléchargée, par le circuit de traitement.

Le processeur CPU (11) commande le dispositif d'affichage visuel pour afficher AFF REP ZONE (21) la représentation symbolique de la zone géographique.

Il peut être prévu de mettre à jour l'affichage sur requête d'un utilisateur ou sur réception d'une notification issue d'un ou de plusieurs objets connectés. Ainsi, à tout moment, le circuit de traitement peut optionnellement obtenir OBT REQ UI (43), via l'interface utilisateur UI (16), une requête d'obtention d'une information relative à un ou plusieurs objets connectés OBJ (14). Par exemple, l'utilisateur peut disposer de contacteurs au niveau des fenêtres de son logement et souhaiter connaître quelles fenêtres sont ouvertes à un instant courant. Par exemple, l'utilisateur peut disposer d'éclairages connectés et souhaiter savoir si les lampes situées dans les pièces à l'étage sont éteintes.

Le processeur CPU (11) peut traiter la requête pour déterminer, parmi les objets connectés OBJ (14), un ou plusieurs objets connectés de nature à fournir l'information requise. Le circuit de traitement peut alors émettre EM REQ INFO (44) un signal de requête d'information à destination du ou des objets connectés concernés. En réponse, une notification, émise par le ou chaque objet connecté concerné, est obtenue OBT NOTIF OBJ (45) par le circuit de traitement. En reprenant l'exemple de l'utilisateur souhaitant connaître quelles fenêtres sont ouvertes, chaque contacteur peut renvoyer au circuit de traitement un signal indiquant, respectivement, que la fenêtre correspondante est ouverte ou fermée.

Par ailleurs, il est possible de prédéfinir des situations types pour lesquelles un objet connecté donné peut automatiquement émettre une notification à destination du circuit de traitement sans nécessiter l'émission préalable d'un signal de requête d'information par le circuit de traitement. Des exemples de telles situations types peuvent être une notification d'installation d'une mise à jour, une détection d'anomalie, d'intrusion, de danger, etc...

Il peut être prévu d'animer un bouton interactif correspondant à une sous-zone géographique sur la base des notifications reçues des objets connectés installés dans cette sous-zone géographique. Animer un bouton interactif est à comprendre comme lui appliquer une animation statique ou dynamique particulière, tel qu'un changement de couleur, une emphase, un clignotement, etc... conférant au bouton interactif une apparence qui est différente de son apparence standard.

Par exemple, plusieurs animations de boutons interactifs peuvent être prédéfinies et accessibles au processeur CPU (11) sous la forme d'une base de données stockée sur le dispositif de stockage de données MEM (12). Chaque animation peut y être associée à un type particulier de notification reçue.

Ainsi, il est possible, au moyen de différentes déclinaisons d'une apparence standard de bouton interactif, de pouvoir sélectionner SELEC ANIM BTN (46) une animation pertinente, ou une combinaison d'animations pertinentes, pour chaque bouton interactif et mettre à jour MAJ REP SYMB (47) la représentation symbolique de la zone afin de prendre en compte la ou les animations sélectionnées.

Ainsi, il est possible d'indiquer à un utilisateur différents types d'informations utiles relatives aux sous-zones, simultanément ou non.

Grâce à la possibilité d'animer les boutons interactifs, un utilisateur peut par exemple instantanément voir grâce au dispositif d'affichage quelles sous-zones contiennent au moins un objet connecté en fonctionnement.

Il est à présent fait référence à [Fig. 4] qui illustre un exemple de représentation symbolique (30) affichée par un dispositif d'affichage. Plusieurs boutons interactifs (31) sont affichés de même que plusieurs boutons non interactifs (32). Chaque bouton est associé à une sous-zone correspondante, ici une pièce d'une maison. Chaque bouton (31, 32) comprend une zone de texte indiquant le nom d'une pièce de la maison ainsi qu'une icône par défaut indiquant la fonction de la pièce. Les sous-zones dans lesquelles sont installés au moins un objet connecté sont représentées par un bouton interactif, matérialisant une possibilité d'interaction avec le ou les objets connectés installés dans la sous-zone correspondante. Les sous-zones dans lesquelles aucun objet connecté n'est installé sont représentées par un bouton non interactif, ici grisé pour indiquer qu'aucune interaction n'est possible. Une requête d'information (51) est reçue par une interface utilisateur vocale, interprétée et affichée à côté de la représentation symbolique (30) sous forme textuelle. Dans cet exemple, un utilisateur souhaite savoir quelles fenêtres de la maison sont ouvertes. Une réponse (52) à la requête d'information est également affichée sur une ligne suivante, toujours sous forme textuelle. Dans cet exemple, dans deux pièces, au moins une fenêtre est ouverte. Les boutons interactifs correspondant à ces pièces sont ici des boutons interactifs animés (53) au moyen d'une emphase combinée à un remplacement de l'icône par défaut par une icône informative indiquant ici une fenêtre ouverte. Ainsi, l'utilisateur voit immédiatement sur la représentation symbolique (30) dans quelles pièces se rendre pour fermer les fenêtres restées ouvertes.

Il est à présent fait référence à [Fig. 5] qui illustre un autre exemple de représentation symbolique (30) affichée par un dispositif d'affichage. Plusieurs boutons interactifs (31), respectivement associés à une sous-zone correspondante d'un logement, sont juxtaposés en fonction de la topologie du logement. Comme sur [Fig. 4], chaque bouton interactif (31) comprend une zone de texte indiquant le nom d'une pièce de la maison ainsi qu'une icône par défaut indiquant la fonction de la pièce. Dans cet exemple, la présence de l'utilisateur est connue via un objet connecté tel qu'un détecteur de présence installé dans une pièce particulière, en l'occurrence le garage. Par ailleurs, un autre objet connecté installé sur le perron, tel qu'une caméra de surveillance, a simultanément détecté un mouvement inhabituel. Pour rendre compte des notifications issues des objets connectés, les boutons interactifs correspondant à ces sous-zones sont ici des boutons interactifs animés (61, 62) de deux différentes manières.

Un premier bouton interactif (61) associé à la sous-zone du perron est animé ici par une emphase, c'est-à-dire l'apparition d'une ligne, éventuellement colorée, marquant le contour du bouton, combinée ici à un changement d'icône. Il est possible de stocker, sur le dispositif de stockage de données, chaque événement signalé à l'utilisateur. Sur la base de l'historique des événements signalés à l'utilisateur, il est possible de déterminer que l'utilisateur n'a jamais été confronté précédemment à un certain type d'événement, et en ce cas de signaler ce type d'événement par le biais d'une animation de bouton répondant à une signalétique spécifique.

Un deuxième bouton interactif (62) associé à la sous-zone du garage est animé ici par un changement global de couleur de tous les éléments du bouton (texte, icône et fond). Une telle signalétique peut être préalablement connue de l'utilisateur, indiquant sa propre présence telle que couramment détectée.

Ainsi, l'utilisateur comprend à la vue de la représentation symbolique (30) que deux types différents d'événements sont simultanément détectés.

Dans un contexte où des capteurs de température sont disposés dans chaque sous-zone, les boutons interactifs associés aux différentes sous-zones peuvent par exemple prendre des couleurs différentes en fonction de la température détectée dans la sous-zone associée. Ainsi, la représentation symbolique affichée peut être interprétée par un utilisateur comme une carte symbolique de température de la zone géographique.

Dans un contexte industriel, un utilisateur peut par exemple être informé, grâce au dispositif d'affichage, d'une éventuelle anomalie de fonctionnement ou de sécurité détectée dans une sous-zone et peut ainsi immédiatement identifier la sous-zone en question et déclencher une intervention ciblée.

Il est à présent fait référence à [Fig. 6] qui illustre un autre exemple de représentation symbolique (30) affichée à un utilisateur par un dispositif d'affichage. Plusieurs boutons interactifs (31) sont représentés et correspondent à des subdivisions respectives d'un réseau d'entreprise en sous-zones géographiques correspondant chacune à un bâtiment respectif où se trouvent des objets connectés sur lesquels un droit de commande est accordé à l'utilisateur. Plusieurs boutons non interactifs (32) sont également représentés et correspondent à des bâtiments pour lesquels l'utilisateur n'a aucun droit d'accès ni de commande sur les objets connectés s'y trouvant. Dans cet exemple, sur la représentation symbolique, un bouton interactif (31) est remplacé par un bouton interactif animé (70) au moyen d'une emphase combinée à un remplacement de l'icône par défaut par une icône informative indiquant ici un risque.

Ainsi, l'utilisateur est informé qu'un objet connecté installé dans le bâtiment correspondant a détecté un événement nécessitant une action urgente. L'utilisateur peut alors interagir via l'interface utilisateur UI (16) avec le bouton interactif animé (70) dans le but d'obtenir plus de détails, par exemple sur la nature de l'événement, sur l'objet connecté ayant détecté l'événement, sur la localisation exacte de cet objet connecté dans le bâtiment, ou encore sur la possibilité de commander à distance cet objet connecté pour remédier à l'événement.

Il est à présent à nouveau fait référence à [Fig. 2]. Une fois la représentation symbolique de la zone géographique affichée, il est possible pour un utilisateur d'interagir INT BTN (22) avec un bouton interactif (31), animé ou non, de son choix. L'interaction peut être par exemple une pression sur le bouton interactif tel qu'apparaissant sur une portion d'un écran tactile. L'interaction peut être par exemple une commande vocale comprenant le nom de la sous-zone tel qu'apparaissant par exemple sur la zone textuelle du bouton interactif. D'autres types d'interaction sont possibles en fonction de la nature de l'interface utilisateur UI (16).

L'interface utilisateur UI (16) obtient par le biais de l'interaction OBT COM BTN (23) une commande d'interaction avec un bouton interactif. Cette commande est transmise au processeur CPU (11) qui la traite.

Le processeur CPU (11) procède, sur la base de la commande d'interaction, à une sélection SELEC SS ZONE (24) de la sous-zone géographique associée au bouton avec lequel l'utilisateur a interagi.

Ensuite le processeur CPU (11) peut accéder à une description de la sous-zone sélectionnée et afficher cette description à l'utilisateur.

Par exemple la description de la sous-zone sélectionnée peut être une liste des objets connectés installés dans la sous-zone sélectionnée. Cette liste peut alors être affichée par le dispositif d'affichage, par exemple sous la forme d'un menu déroulant, classé par ordre alphabétique, par ordre de fréquence d'utilisation, par ordre de préférence ou autre, et permettre une sélection d'un objet connecté individuel ou un groupe d'objets connectés. La sélection de l'objet connecté peut être mise en œuvre par l'interface utilisateur, qu'elle soit tactile ou vocale. Si un seul objet connecté est installé dans la sous-zone sélectionnée, alors la sélection de la sous-zone peut entraîner automatiquement la sélection de l'objet connecté installé dans la sous-zone.

Une interaction avec l'objet connecté sélectionné est mise en œuvre via l'interface utilisateur, que celle-ci soit tactile ou vocale. L'interaction est un pilotage de l'objet connecté sélectionné tel que le fait d'allumer ou d'éteindre cet objet connecté, ou tel que le fait de régler un paramètre de fonctionnement de cet objet connecté, ou tel que le fait de programmer un fonctionnement ultérieur de cet objet connecté.

Pour aider l'utilisateur à opérer le choix d'interaction avec l'objet connecté sélectionné, il est possible d'afficher à ce stade une ou plusieurs indications obtenues de l'objet connecté et/ou une liste de commandes possibles pouvant être générées par le circuit de traitement afin de commander l'objet connecté.

En d'autres termes, le circuit de traitement obtient OBT COM OBJ (250) une commande, issue d'une interaction avec l'interface utilisateur, à destination de l'objet connecté sélectionné.

En réponse à l'obtention de la commande issue de l'interface utilisateur, le circuit de traitement émet EM COM OBJ (26) un signal de commande et le transmet à l'objet connecté sélectionné afin de piloter cet objet connecté conformément au choix opéré par l'utilisateur.

Il est à présent fait référence à [Fig. 7] qui illustre un autre exemple de mode de réalisation.

Dans cet exemple, en réponse à la sélection SELEC SS ZONE (24) de la sous-zone, le processeur CPU (11) accède à une représentation symbolique, détaillée, de la sous-zone sélectionnée et en commande l'affichage AFF REP SSZONE (80) par le dispositif d'affichage à l'utilisateur.

Il est à présent fait référence à [Fig. 8] qui illustre quatre représentations symboliques (30, 91, 94, 97), de niveaux hiérarchiques respectifs 4, 3, 2 et 1.

La représentation symbolique de niveau hiérarchique 4 correspond à une zone géographique, par exemple un site industriel comprenant plusieurs bâtiments. Plusieurs boutons interactifs de niveau hiérarchique 4 (31) juxtaposés sont représentés, chacun correspondant à une sous-zone particulière, par exemple à un bâtiment particulier.

Lorsqu'un utilisateur interagit avec un bouton interactif de niveau hiérarchique 4 (31), il est possible de basculer l'affichage sur la représentation symbolique de niveau hiérarchique 3 (91) correspondant spécifiquement à la sous-zone associée, afin de bénéficier d'un niveau de détail supérieur. Plusieurs boutons interactifs de niveau hiérarchique 3 (93) juxtaposés sont représentés, chacun correspondant à une subdivision respective de la sous-zone sélectionnée, par exemple un étage particulier du bâtiment.

Lorsqu'un utilisateur interagit avec un bouton interactif de niveau hiérarchique 3 (93), il est possible de basculer l'affichage sur la représentation symbolique de niveau hiérarchique 2 (94) correspondant spécifiquement à la subdivision associée, afin de bénéficier d'un niveau de détail supérieur. Plusieurs boutons interactifs de niveau hiérarchique 2 (96) juxtaposés sont ici représentés, chacun correspondant à une subdivision élémentaire respective de la subdivision sélectionnée, par exemple une pièce particulière de l'étage.

Lorsqu'un utilisateur interagit avec un bouton interactif de niveau hiérarchique 2 (96), il est possible de basculer l'affichage sur la représentation symbolique de niveau hiérarchique 1 (97) correspondant spécifiquement à la subdivision élémentaire associée, afin de bénéficier d'un niveau de détail supérieur. Plusieurs boutons interactifs de niveau hiérarchique 1 (99) sont ici représentés, chacun correspondant par exemple à un objet connecté particulier installé dans la pièce. La disposition des boutons interactifs de niveau hiérarchique 1 peut être basée sur les positions respectives des objets connectés installés dans la pièce afin de garantir une identification correcte des objets avec lesquels interagir.

Il est également possible de naviguer depuis une représentation symbolique donnée vers une autre représentation symbolique de niveau hiérarchique supérieur. En effet, les représentations symboliques de niveaux hiérarchiques 1, 2 et 3 (97, 94, 91) comportent chacune un bouton interactif de menu (98, 95, 92) permettant de basculer à nouveau vers l'affichage de la représentation symbolique de niveau hiérarchique supérieur.

Ainsi il est possible d'interagir avec n'importe quel objet connecté présent sur un site industriel complexe, de manière simple et en évitant les erreurs d'identification, grâce à une navigation entre différentes représentations symboliques hiérarchisées en fonction de leur niveau de détail.

Pour illustrer la navigation depuis ces différentes représentations symboliques, il est à présent à nouveau fait référence à [Fig. 7]. On considère ici qu'un utilisateur a choisi, par une interaction avec un bouton interactif (31) de la représentation symbolique (30) d'un site industriel, d'afficher une représentation symbolique (91) d'un bâtiment particulier du site. On considère donc qu'à un instant courant, la représentation symbolique (91) de ce bâtiment est affichée à l'utilisateur par un dispositif d'affichage.

A l'instant courant, l'utilisateur est susceptible d'interagir INT BTN+ (81) avec le bouton interactif de menu (92) affiché. Ce faisant, le circuit de traitement obtient OBT COM BTN+ (82) une commande, issue de l'interface utilisateur UI (16), relative au bouton interactif de menu (92) affiché. En réponse à l'obtention de cette commande, le circuit de traitement commande l'affichage AFF REP ZONE (21) de la représentation symbolique du site industriel. L'utilisateur peut alors choisir de visualiser la représentation symbolique d'un autre bâtiment.

A l'instant courant, l'utilisateur est également susceptible d'interagir avec l'un quelconque des boutons interactifs (93) de la représentation symbolique (91) affichée du bâtiment.

Certains boutons interactifs (93) peuvent être rattachés à des subdivisions du bâtiment, par exemple des étages, des pièces, des sections, etc...

D'autres boutons interactifs (93) peuvent alternativement être rattachés directement à des objets connectés installés dans le bâtiment et non spécifiquement affectés à une subdivision du bâtiment.

Ainsi, l'utilisateur est susceptible d'interagir INT BTN OBJ (87) à l'instant courant avec un bouton interactif (93) directement associé à un objet connecté particulier ou à un groupe d'objets connectés particulier. En ce cas, le circuit de traitement obtient OBT COM OBJ (25), via l'interface utilisateur, une commande d'interaction avec le ou les objets connectés correspondants, et émet EM COM OBJ (26) une commande de pilotage de cet ou ces objets connectés correspondants.

Alternativement, l'utilisateur est susceptible d'interagir INT BTN- (83) à l'instant courant avec un bouton interactif (93) associé à une subdivision du bâtiment. En ce cas, le circuit de traitement obtient OBT COM BTN- (84), via l'interface utilisateur, une commande d'interaction avec ce bouton interactif (93). Le circuit de traitement peut alors sélectionner SELEC SUB (85), parmi un catalogue de représentations symboliques des subdivisions du bâtiment, la représentation symbolique de la subdivision associée à ce bouton interactif. Le circuit de traitement peut alors commander l'affichage AFF REP SUB (86) de la représentation symbolique de cette subdivision.

## Revendications

1. Procédé de commande d'au moins un objet connecté faisant partie d'un groupe d'objets connectés déployés dans une zone géographique et connectés à travers un réseau de télécommunication, le procédé comprenant :
- un affichage (21), par une interface visuelle, d'une représentation symbolique de la zone géographique sous la forme d'une pluralité de boutons interactifs juxtaposés, chaque bouton interactif étant associé à une sous-zone respective de la zone géographique, chaque sous-zone étant apte à être associée à au moins un objet connecté respectif du groupe d'objets connectés,
- une obtention (23) d'une commande de sélection de sous-zone issue d'une interaction (22), via une interface utilisateur, avec un bouton interactif particulier affiché,
- sur la base de la commande de sélection de sous-zone obtenue, une sélection (24) de la sous-zone associée au bouton interactif particulier,
- un affichage (21), par une interface visuelle, d'une représentation symbolique (97) de la sous-zone sélectionnée sous la forme d'une pluralité de boutons interactifs (99) juxtaposés, chaque bouton interactif étant associé à un objet connecté associé à la sous-zone, et
- sur la base d'un retour (25) obtenu via l'interface utilisateur, une émission (26) d'un signal de commande destiné à au moins un objet connecté associé à la sous-zone sélectionnée,
procédé **caractérisé en ce qu'**il comprend une obtention automatique, par les objets connectés du groupe d'objets connectés, de leurs positions relatives, et
une détermination d'un modèle topologique de la zone géographique sur la base des positions relatives obtenues, de manière à ce qu'un objet connecté nouvellement installé ou déplacé soit automatiquement associé à la même sous-zone géographique que l'objet connecté le plus proche, et où
les boutons interactifs de la représentation symbolique de la zone géographique sont agencés en fonction du modèle topologique déterminé.

2. Procédé selon la revendication 1, dans lequel l'interface utilisateur comprend un module d'interface tactile.

3. Procédé selon la revendication 1 ou 2, dans lequel l'interface utilisateur comprend un module d'interface vocale.

4. Procédé selon l'une des revendications 1 à 3, dans lequel chaque bouton interactif a une forme d'alvéole.

5. Procédé selon l'une des revendications 1 à 4, dans lequel chaque bouton interactif comprend une icône et/ou un texte identifiant la sous-zone associée.

6. Procédé selon l'une des revendications 1 à 5, comprenant :
- une réception d'une notification relative à un objet connecté donné associé à une sous-zone donnée, et
- une animation visuelle du bouton interactif associé à la sous-zone donnée afin d'alerter un utilisateur de la réception de la notification.

7. Procédé selon la revendication 6, dans lequel l'animation visuelle comprend une emphase ou un changement de couleur.

8. Procédé selon l'une des revendications 1 à 7, comprenant, en réponse à la sélection de la sous-zone :
- un affichage, par l'interface visuelle, d'une représentation symbolique de la sous-zone sous la forme d'une pluralité de boutons interactifs de niveau hiérarchique inférieur juxtaposés, chaque bouton interactif de niveau hiérarchique inférieur étant associé à une subdivision respective de la sous-zone sélectionnée, chaque subdivision étant associée à au moins un objet connecté respectif,
- une obtention d'une commande de sélection de subdivision issue d'une interaction, via l'interface utilisateur, avec un bouton interactif particulier de niveau hiérarchique inférieur affiché,
- sur la base de la commande de sélection de subdivision obtenue, une sélection de la subdivision associée au bouton interactif particulier de niveau hiérarchique inférieur, et
- dans lequel le signal de commande, émis sur la base d'un retour obtenu via l'interface utilisateur, est destiné à au moins un objet connecté associé à la subdivision sélectionnée.

9. Procédé selon la revendication 8, dans lequel la représentation symbolique de la sous-zone comprend un bouton interactif de menu associé à la zone géographique, et dans lequel le procédé comprend, à réception d'une interaction, via l'interface utilisateur, avec le bouton interactif de menu, une annulation de la commande de sélection de sous-zone.

10. Programme informatique comportant des instructions pour la mise en œuvre du procédé selon l'une des revendications 1 à 9 lorsque ce programme est exécuté par un processeur.

11. Support d'enregistrement non transitoire lisible par un ordinateur sur lequel est enregistré un programme pour la mise en œuvre du procédé selon l'une des revendications 1 à 9 lorsque ce programme est exécuté par un processeur.

12. Circuit de traitement comprenant un processeur (11) connecté à une interface de communication (13) et à un support d'enregistrement non transitoire (12) selon la revendication 11, le processeur étant configuré pour exécuter le programme pour la mise en œuvre du procédé selon l'une des revendications 1 à 9.

## Patentansprüche

1. Verfahren zum Steuern mindestens eines verbundenen Objekts, das zu einer Gruppe verbundener Objekte gehört, die in einem geografischen Bereich eingesetzt und über ein Telekommunikationsnetzwerk verbunden sind, wobei das Verfahren umfasst:
- Ein Anzeigen (21), durch eine visuelle Schnittstelle, einer symbolischen Darstellung des geografischen Bereichs in Form einer Mehrzahl von nebeneinander angeordneten interaktiven Schaltflächen, wobei jede interaktive Schaltfläche einem jeweiligen Teilbereich des geografischen Bereichs zugeordnet ist, wobei jeder Teilbereich geeignet ist, mindestens einem jeweiligen verbundenen Objekt der Gruppe verbundener Objekte zugeordnet zu werden,
- ein Erhalten (23) eines Befehls zum Auswählen eines Teilbereichs aus einer Interaktion (22), über eine Benutzerschnittstelle, mit einer angezeigten besonderen interaktiven Schaltfläche,
- auf der Basis des erhaltenen Befehls zum Auswählen eines Teilbereichs, ein Auswählen (24) des der besonderen interaktiven Schaltfläche zugeordneten Teilbereichs,
- ein Anzeigen (21), durch eine visuelle Schnittstelle, einer symbolischen Darstellung (97) des ausgewählten Teilbereichs in Form einer Mehrzahl von nebeneinander angeordneten interaktiven Schaltflächen (99), wobei jede interaktive Schaltfläche einem verbundenen Objekt zugeordnet ist, das dem Teilbereich zugeordnet ist, und
- auf der Basis einer Rückmeldung (25), die über die Benutzerschnittstelle erhalten wird, ein Senden (26) eines Steuersignals, das für mindestens ein verbundenes Objekt bestimmt ist, das dem ausgewählten Teilgebet zugeordnet ist,
wobei das Verfahren **dadurch gekennzeichnet ist, dass** es ein automatisches Erhalten, durch die verbundenen Objekte der Gruppe verbundener Objekte, ihrer relativen Positionen umfasst, und
ein Bestimmen eines topologischen Modells des geografischen Bereichs auf der Basis der erhaltenen relativen Positionen, so dass ein neu installiertes oder bewegtes verbundenes Objekt automatisch demselben geografischen Teilbereich zugeordnet wird wie das nächstgelegene verbundene Objekt, und wobei die interaktiven Schaltflächen der symbolischen Darstellung des geografischen Bereichs in Abhängigkeit von dem bestimmten topologischen Modell angeordnet sind.

2. Verfahren nach Anspruch 1, wobei die Benutzerschnittstelle ein Berührungsschnittstellenmodul umfasst.

3. Verfahren nach Anspruch 1 oder 2, wobei die Benutzerschnittstelle ein Sprachschnittstellenmodul umfasst.

4. Verfahren nach einem der Ansprüche 1 bis 3, wobei jede interaktive Schaltfläche eine Zellenform aufweist.

5. Verfahren nach einem der Ansprüche 1 bis 4, wobei jede interaktive Schaltfläche ein Icon und/oder einen Text umfasst, die den zugeordneten Teilbereich identifizieren.

6. Verfahren nach einem der Ansprüche 1 bis 5, umfassend:
- ein Empfangen einer Benachrichtigung bezüglich eines gegebenen verbundenen Objekts, das einem gegebenen Teilbereich zugeordnet ist, und
- eine visuelle Animation der interaktiven Schaltfläche, die dem gegebenen Teilbereich zugeordnet ist, um einen Benutzer über das Empfangen der Benachrichtigung zu informieren.

7. Verfahren nach Anspruch 6, wobei die visuelle Animation eine Intensivierung oder Änderung der Farbe umfasst.

8. Verfahren nach einem der Ansprüche 1 bis 7, umfassend, als Reaktion auf das Auswählen des Teilbereichs:
- ein Anzeigen, durch die visuelle Schnittstelle, einer symbolischen Darstellung des Teilbereichs in Form einer Mehrzahl von nebeneinander angeordneten interaktiven Schaltflächen einer niedrigeren Hierarchieebene, wobei jede interaktive Schaltfläche der niedrigeren Hierarchieebene einer jeweiligen Unterteilung des ausgewählten Teilbereichs zugeordnet ist, wobei jede Unterteilung mindestens einem jeweiligen verbundenen Objekt zugeordnet ist,
- ein Erhalten eines Befehls zum Auswählen einer Unterteilung aus einer Interaktion, über die Benutzerschnittstelle, mit einer besonderen interaktiven Schaltfläche der angezeigten niedrigeren Hierarchieebene,
- auf der Basis des erhaltenen Befehls zum Auswählen einer Unterteilung, ein Auswählen der Unterteilung, die der besonderen interaktiven Schaltfläche der niedrigeren Hierarchieebene zugeordnet ist, und
- wobei das Steuersignal, das auf der Basis einer über die Benutzerschnittstelle erhaltenen Rückmeldung gesendet wird, für mindestens ein verbundenes Objekt bestimmt ist, das der ausgewählten Unterteilung zugeordnet ist.

9. Verfahren nach Anspruch 8, wobei die symbolische Darstellung des Teilbereichs eine interaktive Menüschaltfläche umfasst, die dem geografischen Bereich zugeordnet ist, und wobei das Verfahren, beim Empfangen einer Interaktion, über die Benutzerschnittstelle, mit der interaktiven Menüschaltfläche eine Annullierung des Befehls zum Auswählen des Teilbereichs umfasst.

10. Computerprogramm, das Anweisungen beinhaltet, die bei der Ausführung dieses Programms durch einen Prozessor das Verfahren nach einem der Ansprüche 1 bis 9 durchführen.

11. Computerlesbares nichtflüchtiges Speichermedium, auf dem ein Programm gespeichert ist, das bei der Ausführung dieses Programms durch einen Prozessor das Verfahren nach einem der Ansprüche 1 bis 9 durchführt.

12. Verarbeitungsschaltung, umfassend einen Prozessor (11), der mit einer Kommunikationsschnittstelle (13) und einem nichtflüchtigen Speichermedium (12) nach Anspruch 11 verbunden ist, wobei der Prozessor dazu ausgelegt ist, das Programm zur Durchführung des Verfahrens nach einem der Ansprüche 1 bis 9 auszuführen.

## Claims

1. Method for controlling at least one connected object belonging to a group of connected objects deployed in a geographical area and connected through a telecommunications network, the method comprising:
- displaying (21), via a visual interface, a symbolic representation of the geographical area in the form of a plurality of juxtaposed interactive buttons, each interactive button being associated with one respective sub-area of the geographical area, each sub-area being able to be associated with at least one respective connected object of the group of connected objects,
- obtaining (23) a sub-area selection command generated through an interaction (22), via a user interface, with a particular displayed interactive button,
- on the basis of the obtained sub-area selection command, selecting (24) the sub-area associated with the particular interactive button,
- displaying (21), via a visual interface, a symbolic representation (97) of the selected sub-area in the form of a plurality of juxtaposed interactive buttons (99), each interactive button being associated with one connected object associated with the sub-area, and
- on the basis of feedback (25) obtained via the user interface, transmitting (26) a control signal intended for at least one connected object associated with the selected sub-area,
which method is **characterized in that** it comprises the connected objects of the group of connected objects automatically obtaining their relative positions, and
determining a topological model of the geographical area on the basis of the obtained relative positions, so that a newly installed or moved connected object is automatically associated with the same geographical sub-area as the nearest connected object, the interactive buttons of the symbolic representation of the geographical area being arranged depending on the determined topological model.

2. Method according to Claim 1, wherein the user interface comprises a touch interface module.

3. Method according to Claim 1 or 2, wherein the user interface comprises a voice interface module.

4. Method according to any of Claims 1 to 3, wherein each interactive button is honeycomb-cell shaped.

5. Method according to any of Claims 1 to 4, wherein each interactive button comprises an icon and/or text identifying the associated sub-area.

6. Method according to any of Claims 1 to 5, comprising:
- receiving a notification relating to a given connected object associated with a given sub-area, and
- generating a visual animation of the interactive button associated with the given sub-area in order to alert a user to receipt of the notification.

7. Method according to Claim 6, wherein the visual animation comprises an emphasis or a change of colour.

8. Method according to any of Claims 1 to 7, comprising, in response to selection of the sub-area:
- displaying, via the visual interface, a symbolic representation of the sub-area in the form of a plurality of juxtaposed interactive buttons of lower hierarchical level, each interactive button of lower hierarchical level being associated with one respective subdivision of the selected sub-area, each subdivision being associated with at least one respective connected object,
- obtaining a subdivision selection command generated through an interaction, via the user interface, with a particular displayed interactive button of lower hierarchical level,
- on the basis of the obtained subdivision selection command, selecting the subdivision associated with the particular interactive button of lower hierarchical level, and
- in which the control signal, transmitted on the basis of feedback obtained via the user interface, is intended for at least one connected object associated with the selected subdivision.

9. Method according to Claim 8, wherein the symbolic representation of the sub-area comprises an interactive menu button associated with the geographic area, and wherein the method comprises, upon receipt of an interaction, via the user interface, with the interactive menu button, cancelling the sub-area selection command.

10. Computer program comprising instructions for implementing the method according to any of Claims 1 to 9 when this program is executed by a processor.

11. Non-transient computer-readable recording medium on which there is recorded a program for implementing the method according to any of Claims 1 to 9 when this program is executed by a processor.

12. Processing circuit comprising a processor (11) connected to a communication interface (13) and to a non-transient storage medium (12) according to Claim 11, the processor being configured to execute the program for implementing the method according to any of Claims 1 to 9.
